# EUROPÄISCHE PATENTSCHRIFT

(11) **EP 3 027 722 B1**
(45) Veröffentlichungstag und Bekanntmachung des Hinweises auf die Patenterteilung: **28.03.2018**
(21) Anmeldenummer: 14738458.0
(22) Anmeldetag: 04.07.2014
(51) Int. Cl.: C12C 13/00, B67D 7/78

(54) **TANKANBINDUNG**
TANK CONNECTION
RACCORDEMENT DE CUVES

(30) Priorität: 29.07.2013 DE 102013214729
(43) Veröffentlichungstag der Anmeldung: 08.06.2016
(73) Patentinhaber: KRONES Aktiengesellschaft, 93073 Neutraubling (DE)
(72) Erfinder: THIEL, Tobias, 93073 Neutraubling (DE); REUSS, Horst-Hermann, 93073 Neutraubling (DE); PAINTNER, Hans, 93073 Neutraubling (DE); STENGER, Detlef, 93073 Neutraubling (DE)
(74) Vertreter: Grünecker Patent- und Rechtsanwälte PartG mbB
(86) Internationale Anmeldenummer: PCT/EP2014/064308
(87) Internationale Veröffentlichungsnummer: WO 2015/014567

(56) Entgegenhaltungen:
- WO-A1-2010/130331
- DE-A1- 2 511 066
- DE-A1-102009 032 547
- DE-A1-102009 055 742
- DE-C1- 10 108 259
- US-A- 4 730 651

## Beschreibung

### Gebiet der Erfindung

Die vorliegende Erfindung betrifft eine Anbindung von Tanks und insbesondere von Gärtanks und/oder Lagertanks in einer Brauerei.

### Hintergrund der Erfindung

Bei der Bierherstellung kommt die fertige Würze nach dem Sudhausprozess in den Gär- und Lagerkeller. Dabei lagert das Bier in Gär- und Lagertanks. Beispielsweise werden dabei zylindrokonische Gär- und Lagertanks verwendet. Die zylindrokonischen Gär- und Lagertanks sind zur Atmosphäre hin geschlossene/offene Behälter, in denen die Gärung oder die Reifung/Lagerung des Bieres erfolgt. Die Gärung und Reifung/Lagerung können im selben Tank oder in getrennten Tanks stattfinden. Bei letzterem erfolgt ein Umpumpen des Zwischenproduktes (zum Beispiel ein Schlauchen des Grünbiers). Die zylindrokonischen Gär- und Lagertanks werden im Allgemeinen von unten befüllt und nach unten entleert. Die Befüllung von unten und Entleerung nach unten bedingt, dass die zylindrokonischen Gär- und Lagertanks mit mehreren Leitungen in Verbindung gebracht werden müssen, insbesondere mit einer Zuleitung für die Würze, einer Ableitung für die Erntehefe, einer Ableitung für das Bier und eine Zu- und Ableitung für die einzelnen CIP (Cleaning-in-Place)-Flüssigkeiten. Dazu ist es wichtig, dass diese Verbindungen kontaminationsfrei und ohne Zutritt von Sauerstoff bereitgestellt werden.

Für die Anbindung der Gär- und Lagertanks an Befüllleitungen bzw. Entleerleitungen sind im Stand der Technik feste Anbindungsverrohrungen und mobile Schlauchanbindungen bekannt. Bei der festen Anbindungsverrohrung werden zur leckagesicheren Absperrung verschiedener Leitungen zum Beispiel automatische leckagesichere Ventile oder mittels Verschraubungen lösbare Schwenkbögen in Verbindung mit Absperrklappen verwendet. Dabei können manuell versetzbare Schwenkbögen je nach gewünschter Prozessführung zum Verbinden entsprechender Leitungen umgesetzt werden. Die Anbindung der Schwenkbögen erfolgt typischerweise über Tankeinlauf- bzw. Tankauslaufleitungen, die in der Regel zum Tank hin offen sind und zusammen mit diesem gereinigt werden. Im Rahmen der Schlauchanbindung werden Schläuche nach Bedarf manuell zur Verbindung der Tankausläufe bzw. -einläufe mit den entsprechenden Leitungen verwendet. DE 102009032547 offenbart ein Verfahren zur automatisierten Steuerung eines Rohrleitungsnetzes. Die Schwenkbögen und Hilfsarmaturen zur Schlauchanbindung (zum Beispiel Bögen, Koppelstücke oder Absperrarmaturen) werden vor ihrer Verwendung typischer Weise in mit einem Desinfektionsmittel gefüllten Wannen aufbewahrt und müssen vor ihrer Verwendung für einen Befüll- oder Entleervorgang den Wannen entnommen und an jeweiligen Verbindungsstellen montiert werden. Hierbei besteht das Risiko des Verschmutzens der Schwenkbögen und Schläuche während des Hantierens. Außerdem muss, wenn das zu fördernde Produkt nicht mit Sauerstoff in Kontakt geraten darf, die Verbindung mithilfe von Wasser, vorzugsweise mit entgastem Wasser entlüftet werden. Generell müssen herkömmlich die Verbindungswege von und zu den Tanks aufwändig ausgeschoben (Wasser durch Produkt und umgekehrt verdrängt) werden, indem Ventile rechtzeitig und in bestimmter Reihenfolge betätigt werden. Die Anbindung über Schwenkbögen und relativ lange Tankein- bzw. Tankauslaufleitungen (Stichleitungen) ist hierbei dahingehend nachteilig, dass durch den geringen Stoffaustausch zwischen Leitung und Tank die Bildung verschiedener qualitätsmindernder Stoffwechselprodukte in der Leitung begünstigt wird.
Deshalb werden alternativ zur Anbindung von Schwenkbögen an langen Tankeinlauf-bzw. Tankauslaufleitungen auch Schwenkbogen- oder Doppelsitzventilanbindungen der Befüll- bzw. Entleerleitungen an sogenannte Tankstraßen (Loops) vorgesehen. Der Anfang bzw. das Ende einer solchen Tankstraße wird dabei jeweils mit einem Schwenkbogen- oder Doppelsitzventil mit der jeweiligen Befüll- bzw. Entleerleitung verbunden. Die Tankstraße wird beispielsweise über ein Doppelsitzventil, welches sich direkt am Tank befindet, mit demselben verbunden. Dabei lassen sich kurze Tankeinlauf- bzw. Tankauslaufleitungen realisieren. In einer Tankstraße können sich ein oder auch mehrere Tanks befinden. Bei der Zusammenfassung (Gruppierung) von Tanks in Tankstraßen ist die Reihenfolge, in der die Tanks zu befüllen sind, bestimmten Regeln unterworfen, um eine effektive Nutzung der insgesamt verfügbaren Tankkapazität zu gewährleisten. Beispielsweise muss sichergestellt sein, dass nicht innerhalb einer Tankgruppe über deren Loop ein Tank befüllt werden muss, während gleichzeitig schon aus einem anderen Tank über denselben Loop Produkt entnommen, zum Beispiel geschlaucht, wird. Eine solche Doppelbelegung würde unnötige Wartezeiten bzw. Abweichungen vom Produktionsplan mit sich bringen. Um solche Doppelbelegungen zu vermeiden und ein effektives Ausnutzen der Tankkapazitäten sicherzustellen, ist also ein definiertes Tankbelegungsmanagement erforderlich. Bei Klein- und Sortimentsbrauereien ist ein solches Tankbelegungsmanagementsystem oftmals zu komplex und somit nicht praktikabel bzw. unwirtschaftlich. Die festen Loops erlauben keine willkürliche Flexibilität hinsichtlich der Reihenfolge der Nutzung der zur Verfügung stehenden Tanks.

Es liegt somit der vorliegenden Erfindung eine Aufgabe dahingehend zugrunde, eine Anbindung von Tanks, insbesondere von Gärtanks und/oder Lagertanks in einer Brauerei, bereitzustellen, die eine maximale Flexibilität bei einem hohen hygienischen Standard und minimalen manuellen Eingriffen mit der damit verbundenen Gefahr der Verschmutzung der Verbindungen bei gleichzeitig erhöhtem Automatisierungsgrad ermöglicht.

### Beschreibung der Erfindung

Die oben genannte Aufgabe wird durch ein Tankanbindungssystem gemäß Anspruch 1 gelöst. Das Tankanbindungssystem umfasst mehrere Tanks, von denen jeder einen Tanklauslauf (bzw. Tankeinlauf) aufweist, mit dem über ein erstes Ventil (insbesondere ein automatisches leckagesicheres Ventil) ein Leitungsstück verbunden ist, das an einem ersten Ende eine erste Schlauchverbindungsstelle und an einem zweiten Ende eine zweite Schlauchverbindungsstelle aufweist. Die Verbindung des Tankauslaufs mit dem Leitungsstück liegt also zwischen den beiden Enden und somit zwischen den Schlauchverbindungsstellen. Weiterhin umfasst das Tankanbindungssystem mehrere Leitungen, die jeweils zwei weitere Schlauchverbindungsstellen aufweisen, die durch ein zweites Ventil (Absperrventil) voneinander abgesperrt werden können oder durch eine Leitungsunterbrechung voneinander getrennt sind. Durch die Leitungsunterbrechung ist eine Leitung in zwei Leitungsstücke physikalisch getrennt. Eine der zwei weiteren Schlauchverbindungsstellen befindet sich an einem der physikalisch voneinander getrennten Leitungsstücke, und die andere der zwei weiteren Schlauchverbindungsstellen befindet sich an dem anderem der physikalisch voneinander getrennten Leitungsstücke. Es kann sich um ein Tankanbindungssystem für eine Brauerei handeln, in dem die Tanks zur Gärung, Reifung und Lagerung für Bier bzw. Bierzwischenprodukte verwendet werden. Der Tankauslauf dient sowohl einem entleeren als auch einem Befüllen des Tanks; die Begriffe "Tankauslauf" und "Tankeinlauf" werden hier synonym gebraucht.

Analog zu Festverrohrungssystemen mit Tankstraßen können kurze Tankausläufe realisiert werden, so dass die Gefahr der Bildung qualitätsmindernder Stoffe minimiert wird. Die Schläuche können flexibel zur Herstellung von Verbindungen für eine bestimmte gewünschte Abfolge von Vorgängen, wie z. B. Spülen, Befüllen und Reinigen genutzt werden, ohne dass, nachdem die entsprechenden Verbindungen hergestellt worden sind, diese gelöst und wieder neu hergestellt werden müssen, wie das in herkömmlichen Schlauch- oder Schwenkbogenkellern der Fall ist. Die für eine Programmabfolge von Reinigen, Befüllen und Entleeren erforderlichen Schlauchverbindungen werden hergestellt und dann kann ein solches Programm automatisch ablaufen, ohne dass eine manuelle Rekonfiguration der Schlauchverbindungen notwendig werden würde (siehe auch detaillierte Beschreibung unten).

Verglichen mit herkömmlichen festverrohrten Tankstraßen (Loops) ermöglicht das erfindungsgemäße Tankanbindungssystem höchste Flexibilität hinsichtlich der Reihenfolge, in der die angebundenen Tanks verwendet werden, da sie mithilfe der Schlauchverbindungen flexibel für eine bestimmte Programmabfolge (z. B. von Spülen, Befüllen, Reinigen) gruppiert werden können. Es können zudem lediglich die innerhalb einer bestimmten Zeitspanne (Arbeitsschicht) für eine oder mehrere Programmabfolge(n) erforderlichen Verbindungen hergestellt werden.

Zur automatischen Steuerung einzelner Schritte, z. B. eines Ausschubvorganges (insbesondere zur Trennung zwischen Wasser- und Produktphase) innerhalb eines Programmes, z. B. Reinigen (insbesondere der Tanks), Befüllen oder Entleeren (der Tanks) kann eine der beiden Schlauchverbindungsstellen am Tank mit einem (automatischen) Absperrventil ausgestattet sein. Die mehreren Leitungen können zumindest eine Befüllleitung zum Befüllen von zumindest einem der mehreren Tanks und zumindest eine Entleerleitung zum Entleeren von zumindest einem der mehreren Tanks umfassen.

Gemäß einer Weiterbildung ist in jeder Befüllleitung stromabwärts von (nach) der stromabwärtigen Schlauchverbindungsstelle eine Kombination eines Entwässerungsventils (auf Gully) und eines Blockventils (zur Absperrung der weiterführenden Leitung z. B. zum CIP Rücklauf) zum Ausschub z. B. von Wasser vorgesehen. Die stromabwärtige Schlauchverbindungsstelle einer Befüllleitung wird durch die Einlaufseite der zwei weiteren Schlauchverbindungsstellen der Befüllleitung definiert; von der stromaufwärtigen Schlauchverbindungsstelle, d.h. der Auslaufseite der zwei weiteren Schlauchverbindungsstellen der Befüllleitung, wird ein Tank über einen entsprechend verbundenen Schlauch gefüllt.

Ein Wasserausschub bzw. eine Entlüftung von Leitungen und Schläuchen kann insbesondere automatisch erfolgen, wenn jede Entleerleitung mittels eines insbesondere automatischen Ventils stromaufwärts von (vor) der stromaufwärtigen Schlauchverbindungsstelle mit einer Wasserleitung verbunden ist. Die stromaufwärtige Schlauchverbindungsstelle der Entleerleitung wird durch die Auslaufseite der zwei weiteren Schlauchverbindungsstellen der Entleerleitung gebildet; über die stromabwärtige Schlauchverbindungsstelle, d.h. der Einlaufseite der zwei weiteren Schlauchverbindungsstellen der Entleerleitung, wird ein Tank über einen entsprechend verbundenen Schlauch geleert.

Gemäß einer weiteren Weiterbildung ist jede Entleerleitung stromaufwärts von der stromaufwärtigen Schlauchverbindungsstelle über ein, insbesondere automatisches und leckagesicheres, drittes Ventil mit einer Cleaning-in-Place-(CIP-)Einrichtung verbunden. Hierdurch kann automatisch ein CIP-Vorgang für Leitungen inklusive der eingebundenen Schläuche ausgeführt werden, ohne dass vorher oder nachher im Verlauf einer Programmabfolge Schläuche demontiert und wieder montiert werden müssten.

In den oben beschriebenen Beispielen können über mehrere erste Schläuchen eine erste Gruppe von den mehreren Tanks mit einer Befüllleitung und/oder über mehrere zweite Schläuchen eine zweite Gruppe von den mehreren Tanks mit einer Entleerleitung über die entsprechenden Schlauchverbindungsstellen angebunden sein. Durch bestimmte ausgewählte Schlauchverbindungen werden Gruppen von Tanks zusammengefasst. Insbesondere kann eine Gruppe von leeren Tanks als Zieltankgruppe zum Befüllen vorgesehen sein und eine weitere Gruppe von gefüllten Quelltanks als Quelltankgruppe zum Entleeren vorgesehen sein. Das Befülllen und Entleeren der jeweiligen Tanks sowie Ausschieben von Leitungen und Schläuchen mit allen vor- und nachbereitenden Programmen wie z. B. Spülen oder Reinigen kann nach Herstellung der entsprechenden Schlauchverbindungen in einer Programmabfolge ausgeführt werden, ohne dass ein Schlauchwechsel notwendig werden würde.

Die oben genannte Aufgabe wird auch durch ein Verfahren zum Befüllen und/oder Entleeren von Tanks, die jeweils einen Tankauslauf aufweisen, der über ein erstes Ventil mit einem Leitungsstück zwischen zwei Schlauchverbindungsstellen desselben verbunden ist, gelöst, wobei das Verfahren die folgenden Schritten umfasst:
a) Anbinden einer Gruppe von Zieltanks der Tanks an zumindest eine Befüllleitung, die zwei Befüllleitungs-Schlauchverbindungsstellen aufweist, die durch ein zweites Ventil voneinander abgesperrt werden können oder durch eine Leitungsunterbrechung voneinander getrennt sind, mithilfe einer ersten Mehrzahl an Schläuchen,
   wobei das Anbinden das Verbinden von einer der zwei Schlauchverbindungsstellen am Tank mit einer der zwei Befülllleitungs-Schlauchverbindungsstellen (und gegebenenfalls auch von der zweiten Schlauchverbindungsstellen am Tank mit der zweiten Befülllleitungs-Schlauchverbindungsstelle) durch Schläuche der ersten Mehrzahl an Schläuchen umfasst;
und/oder b) Anbinden einer Gruppe von Quelltanks der Tanks an zumindest eine Entleerleitung, die zwei Entleerleitungs-Schlauchverbindungsstellen aufweist, die durch ein zweites Ventil voneinander abgesperrt werden können oder durch eine Leitungsunterbrechung voneinander getrennt sind, mithilfe einer zweiten Mehrzahl an Schläuchen;
   wobei das Anbinden das Verbinden von einer der zwei Schlauchverbindungsstellen mit einer der zwei Entleerleitungs-Schlauchverbindungsstellen durch Schläuche der zweiten Mehrzahl an Schläuchen umfasst;
   und nach dem Beenden der Anbindung der Gruppe von Zieltanks und/oder der Gruppe von Quelltanks
c) Befüllen der Gruppe von Zieltanks mit einem Produkt und/oder Leeren der Gruppe von Quelltanks, ohne Lösen einer Schlauchverbindung.

Die Gruppe von Zieltanks und die Gruppe von Quelltanks kann jeweils einen oder mehrere Tanks umfassen.
Nachdem die Anbindungen der entsprechenden Tanks abgeschlossen ist, kann also ein Befüll- und/oder Entleervorgang durchgeführt werden, ohne dass auch nur eine der durch die Schläuche der ersten und/oder zweiten Mehrzahl an Schläuchen realisierten Schlauchverbindungen gelöst werden müsste. Eine Kontamination durch Schlauchhandhabung wird somit ausgeschlossen. Das Anbinden über die Schlauchverbindungen gemäß einer gewünschten Prozessabfolge von Entleeren und/oder Befüllen von Tanks geschieht mit höchster Flexibilität. Das Entleeren bzw. Befüllen von Tanks kann insbesondere das Schlauchen eines Produkts von einem Quelltank in einen Zieltank umfassen.

Das Anbinden der Zieltanks kann das Verbinden der Zieltanks miteinander durch Schläuche aus der ersten Mehrzahl an Schläuchen miteinander und/oder das Anbinden der Quelltanks kann das Verbinden der Quelltanks miteinander durch Schläuche aus der zweiten Mehrzahl an Schläuchen umfassen. Die so miteinander verbundenen Tanks können Tanks einer Gruppe darstellen.

Gemäß einer Weiterbildung umfasst das Verfahren weiterhin nach dem Beenden der Anbindung der Gruppe von Zieltanks und/oder der Gruppe von Quelltanks vor dem Füllen und Leeren das Spülen mit Wasser, insbesondere mit entgastem Wasser zum Zweck der Entlüftung, der zumindest einen Befüllleitung und/oder der zumindest einen Entleerleitung und/oder von Schläuchen der ersten Mehrzahl an Schläuchen und/oder der zweiten Mehrzahl an Schläuchen, ohne Lösen einer Schlauchverbindung (also ohne dass einer der durch die Schläuche der ersten und/oder zweiten Mehrzahl an Schläuchen realisierten Schlauchverbindungen gelöst werden müsste). Alternativ oder zusätzlich zu dem Spülen mit Wasser kann eine Desinfektion, eine Sterilisation oder ein Reinigen erfolgen.

Weiterhin kann das Verfahren das Ausschieben des Wassers aus der zumindest einen Befüllleitung und/oder der zumindest einen Entleerleitung und/oder von Schläuchen der ersten Mehrzahl an Schläuchen und/oder der zweiten Mehrzahl an Schläuchen nach Beenden des Spülens, ohne Lösen einer Schlauchverbindung, umfassen.

Die oben genannten Beispiele des Verfahrens können weiterhin den Schritt des Reinigens der zumindest einen Befüllleitung und/oder der zumindest einen Entleerleitung und/oder von Schläuchen der ersten Mehrzahl an Schläuchen und/oder der zweiten Mehrzahl an Schläuchen nach Beenden des Befüllens und/oder Entleerens mithilfe einer angebundenen Cleaning-In-Place-Einrichtung (CIP), ohne Lösen einer Schlauchverbindung, umfassen. Die CIP-Einrichtung kann wie oben im Zusammenhang mit dem Anbindungssystem beschrieben angebunden sein.

Weiterhin kann ein Tank oder es können nacheinander mehrere der Tanks nach Beenden des Befüllens und/oder Entleerens mithilfe der angebundenen Cleaning-In-Place-Einrichtung, ohne Lösen einer Schlauchverbindung, gereinigt werden.

Bei allen oben genannten Beispielen für das erfindungsgemäße Verfahren können die oben beschriebenen Weiterbildungen des erfindungsgemäßen Anbindungssystems Verwendung finden.

Im Folgenden werden Ausführungsformen einer erfindungsgemäßen Vorrichtung unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

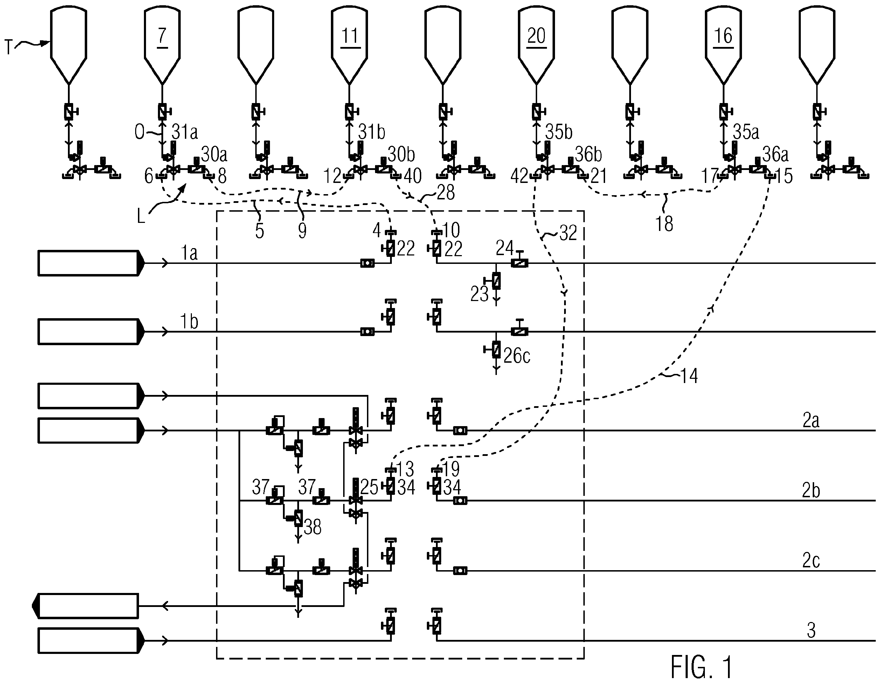

Figur 1 zeigt ein Anbindungssystem bzw. einen Teil eines Schlauchkellers einer Brauerei gemäß einem Beispiel der Erfindung mit Tanks, Befüllleitungen und Entleerleitungen sowie Schläuchen zur Verbindung der Tanks mit den Befüllleitungen und Entleerleitungen.

Das in Figur 1 veranschaulichte Anbindungssystem umfasst eine Mehrzahl an Lager- oder Gärtanks T, unter anderem die Tanks 7, 11, 16 und 20. Jeder der Tanks weist einen relativ kurzen Tankauslauf bzw. -einlauf 0 auf. Im Weiteren wird durchgängig die Bezeichnung "Tankauslauf" verwendet. Es versteht sich aber, dass bei Befüllen des Tanks dieser Tankauslauf als Einlauf fungiert. In den Tankausläufen 0 sind Ventile 31a, beispielsweise automatisch schaltbare Ventile, beispielsweise in Form von Doppelsitzventilen, zur Anbindung mit einem relativ kurzen Leitungsstück L vorgesehen, wie es in Figur 1 gezeigt ist. Das Leitungsstück L trägt an seinen beiden Enden Schlauchverbindungsstellen 6 bzw. 8. An der Schlauchverbindungsstelle 8 befindet sich ein weiteres Ventil 30a, beispielsweise ein automatisches Scheibenventil. Durch das Ventil 30a können Ausschubvorgänge bei der Anbindung des Tanks 7 sowohl als Quelltank als auch als Zieltank vollautomatisch ablaufen.

Weiterhin sind Befüllleitungen 1a, 1b und Entleerleitungen 2a, 2b, 2c vorgesehen. Über die Befüllleitungen 1a, 1b kann beispielsweise Würze oder Grünbier (d.h. Schlaucherbier bzw. Jungbier bzw. teilweise vergorenes, noch nicht gereiftes Bier) in die Tanks T gefüllt werden. Über die Entleerleitungen 2a, 2b kann beispielsweise aus einem Tank T Hefe zum Hefekeller oder trübes Bier zu einer Filtervorrichtung geliefert werden. Jede Befüllleitung 1a, 1b weist Schlauchverbindungsstellen 4, 10 mit Absperrventilen 22 auf und jede Entleerleitung 2a, 2b weist ebenfalls Schlauchverbindungsstellen 13, 19 mit Absperrventilen 34 auf. Die Tanks T und die Befüllleitungen 1a, 1b bzw. die Entleerleitungen 2a, 2b können mithilfe der Schlauchverbindungsstellen über Schläuche 5, 9, 14 und 32 miteinander verbunden werden. Tanks, die als Quelltank dienen, können mithilfe von Schläuchen an eine CIP-Rücklauf-Schiene 3 angeschlossen und gereinigt werden.

Die Schlauchverbindungsstellen 4, 10 sind jeweils durch ein Absperrventil oder eine Leitungsunterbrechung voneinander getrennt. In den Befüllleitungen 1a, 1b ist hinter der zweiten Schlauchverbindungsstelle 10 (rechts in Figur 1) jeweils eine Kombination aus Entwässerungsventil (23) und Blockventil (24) zum Ausschub von Wasser vorgesehen. In den Entleerleitungen 2a, 2b, 2c sind vor der ersten Schlauchverbindungsstelle 13 (links in Figur 1) jeweils ein automatisches Ventil 25, beispielsweise in Form eines Doppelsitzventils, und eine CIP-Anbindung 37, 38, wie in Figur 1 gezeigt, beispielsweise als Dreierkombination, vorgesehen. Über das automatische Ventil 25 ist eine Wasserleitung angebunden, so dass ein Ausschub mithilfe von Wasser bzw. eine Entlüftung automatisch erfolgen kann.

In der in Figur 1 gezeigten Konfiguration stellen die Tanks 7 und 11 Zieltanks und die Tanks 16 und 20 Quelltanks dar. Ein zur Befüllung anstehender Zieltank 7 wird angebunden, indem von der Auslaufseite (linke Seite) der Schlauchverbindungsstelle 4 der Befüllleitung 1a eine Schlauchverbindung 5 zu derjenigen Verbindungsstelle 6 des Leitungsstücks L des Zieltanks 7 hergestellt wird, die nicht mit dem Absperrventil 30a versehen ist. Ein weiterer Schlauch 9 wird an der mit dem Absperrventil 30a versehenen Verbindungsstelle 8 angeschlossen. Soll nur der Tank 7 angebunden werden, so wird ein Schlauch 9 mit der Einlaufseite (rechte Seite) der Schlauchverbindungsstelle 10 der Befüllleitung 1a verbunden. Soll hingegen auch der Zieltank 11 angebunden werden, wird der Schlauch 9 mit derjenigen Verbindungsstelle 12 des Leitungsstücks L des Zieltanks 11 verbunden, die nicht mit dem Absperrventil 30b versehen ist. In diesem Fall wird ein weiterer Schlauch 28 an der mit dem Absperrventil 30b versehenen Verbindungsstelle 40 angeschlossen und mit der Einlaufseite der Schlauchkopplung 10 der Befüllleitung 1a verbunden.

Ein zur Entleerung vorgesehener Quelltank 16 wird angebunden, indem eine Schlauchverbindung 14 zwischen derjenigen Verbindungsstelle 15, die mit dem Absperrventil 36a versehen ist, und der Auslaufseite (links) 13 der Schlauchverbindungsstelle der Entleerleitung 2b hergestellt wird. An der Schlauchverbindungsstelle 17 wird ein weiterer Schlauch 18 angeschlossen, der, wenn nur die Anbindung des einen Quelltanks 16 gewünscht ist, mit der Einlaufseite 19 (rechte Seite) der Entleerleitung 2b verbunden ist. Falls auch ein weiterer Quelltank 20 angebunden werden soll, wird der Schlauch 18 mit der mit dem Ventil 36b versehenen Verbindungsstelle 21 des Leitungsstücks des Tanks 20 verbunden. Eine weitere Schlauchverbindung 32 wird zwischen der nicht mit dem Ventil 36b versehenen Verbindungsstelle 42 des Leitungsstücks des Tanks 20 und der Einlaufseite 19 der Schlauchverbindungsstelle der Entleerleitung 2b hergestellt.

Natürlich können Anbindungen weiterer Tanks T, sei es als Quelltank oder Zieltank analog erfolgen. Allgemein kann gegenüber festen Rohrverbindungen durch die Schlauchverbindungen der vorliegenden Erfindung eine einfache und schnelle Montage mit der Möglichkeit beliebiger Erweiterungen ohne Stillstandzeiten errecht werden. Da nur die für die jeweiligen Verbindungen hergestellten Wege ausgeschoben werden müssen, verringert sich der Wasser-, Reinigungsmittel- und Energieverbrauch gegenüber Anbindungen mit festen Rohrverbindungen. Zudem werden nur kurze Tankausläufe benötigt, so dass das Risiko der Bildung qualitätsmindernder Stoffe verringert wird.

Zur Reinigung werden die Tanks T analog der Einbindung von Zieltanks in eine Befüllleitung z. B. 1a an der CIP-Rücklaufschiene 3 angebunden. Wie oben beispielhaft beschrieben, können beliebige Tankgruppierungen mittels Schläuchen auf eine flexible Art hergestellt werden. Nach Herstellung einer gewünschten Tankgruppierung kann ein Programm z. B. zum Spülen oder Reinigen von Leitungen/Schläuchen sowie z. B. zum Füllen oder Entleeren gestartet werden. Innerhalb des Programmablaufs ist keine Demontage oder Montage von Schlauchverbindungen oder anderweitigen Verbindungsmitteln notwendig, sodass keine Verunreinigungen durch die Handhabung von Schläuchen oder anderweitigen Verbindungsmitteln auftreten können. Hinsichtlich der Reihenfolge, in der die vorhandenen Tanks zum Befüllen oder Entleeren betrieben werden, besteht größtmögliche Flexibilität, da durch die Schlauchverbindungen die Tanks beliebig gruppiert an Befüll-, Entleer- und CIP-Rücklauf-Schienen angebunden werden können. Insbesondere können n Tanks mithilfe von n+1 Schläuchen direkt an Entleerleitungen (eine Entleerschiene) und Befüllleitungen (eine Befüllschiene) angebunden werden. Nachdem die Anbindung erfolgt ist, können die Leitungen einschließlich der Schläuche gespült, gereinigt, desinfiziert oder steril gefahren (und dabei vorzugsweise jeweils gleichzeitig entlüftet) werden, und es kann ohne irgendeine Verbindungslösung und/oder -entlüftung der eigentliche Transferprozess von Produkten von den Tanks bzw. in die Tanks ablaufen. Während des Transferprozesses ist ein automatischer Ausschub (Verdrängung eines Produkts durch Wasser oder umgekehrt) möglich. Ebenso kann automatisch von einem angebundenen Tank auf einen anderen angebundenen Tank umgeschaltet werden. Nach Beenden eines Transferprozesses kann wiederum ohne irgendeine Verbindungslösung und/oder -entlüftung ein Spül- oder Reinigungsprogramm durchgeführt werden. Während des Transferprozesses und einem vorangehenden Reinigungs-/Sterilisationsprozess und/oder nachfolgenden Spül- oder Reinigungsprozess sind keinerlei manuelle Umschlussarbeiten notwendig. Die Schlauchverbindungen müssen also insbesondere nicht zwischen einem CIP-Prozess oder einem Spül-Prozess und einem Transferprozess gelöst und in einer neuen Position wiederhergestellt werden. Sämtliche Umschalt-, Entlüftungs- und Ausschubvorgänge können vollautomatisch ausgeführt werden. Spezielle Schlauchaufbewahrungs- oder Reinigungsstationen sowie Desinfektionswannen für Schlaucharmaturen sind prinzipiell nicht vonnöten.

Mithilfe des erfindungsgemäßen Anbindungssystems können verschiedene Vorgänge nacheinander bei einmal, etwa wie oben beschrieben, eingerichteten und unveränderten Schlauchverbindungen ausgeführt werden. In folgenden wird weiterhin mit Bezug auf Figur 1 eine beispielhafte vollautomatisierte Programmfolge beschrieben. Figur 1 zeigt hierbei nur einen Teil der benutzten Schlauchverbindungen. Die beispielhafte Programmfolge umfasst die Programmschritte: Spülen der Leitungen einschließlich der Schläuche, Befüllen eines oder mehrerer Tanks, Hefeernte, Schlauchen, Entleeren eines oder mehrerer Tanks, Spülen und Reinigen (Cleaning-in-Place) von Leitungen, Schläuchen und Tanks.

Zunächst werden Leitungen und Schläuche mit entgastem Wasser entlüftet. Die Leitungen können eine Würzeleitung, Schlaucherbierleitung, Hefeleitung, Unfiltratleitung, etc. umfassen. Die jeweilige Leitung wird zusammen mit den mit den Leitungen verbundenen Schläuchen mit entgastem Wasser ausgespült, um diese zu entlüften. Dabei sind die Absperrventile 22 an den Schlauchverbindungsstellen offen. Beim Spülen einer Befüllleitung 1a, 1b ist das Absperrventil auf Gully 23 geöffnet und dasjenige zur Absperrung der Leitung 24 geschlossen. Die Würzeleitung 1a wird vom Sudhaus und die Schlaucherbierbefüllleitung 1b von der Entleerseite 2c aus mit Wasser gespült. Zum Spülen einer Entleerleitung 2a, 2b, 2c wird das Wasserventil 25 der jeweiligen Leitung geöffnet. Die Entleerung in einen Gully erfolgt am jeweiligen Ende der Entleerleitung, also beispielsweise im Hefekeller, Filterkeller, oder am Ende 26c der Schlaucherbierbefüllleitung 1b. Der Spülschritt endet mit Ablauf einer rezept- und eingabeabhängigen Soll-Spülmenge, zum Beispiel gemessen über einen induktiven Durchflussmesser (nicht gezeigt) in den Entleerschienen bzw. im Sudhaus (Würze). Die jeweilige Sollspülmenge setzt sich aus einem Rezeptwert für die jeweiligen Volumina der Festverrohrung und der Volumina der verwendeten Schläuche zusammen.

Alternativ zu einem induktiven Durchflussmesser (IDM) kann die jeweilige Sollspülmenge auch mit einem anderen Durchflussmesser ermittelt werden. Weiterhin wäre auch eine Ermittlung über die Zeit oder mithilfe eines weiteren Messgeräts möglich, welches die Trübung oder eine andere physikalische Eigenschaft erfasst. Prinzipiell ist jedes Verfahren geeignet, welches die Phasengrenze von Wasser und Produkt unterscheiden kann. In der weiteren Beschreibung wird der einfachheitshalber stets lediglich der IDM genannt, die Erfindung ist jedoch nicht auf dieses Messprinzip beschränkt.

Sodann kann ein Befüllen, beispielsweise mit Würze erfolgen. Über die Befüllleitung 1a und die in diese Leitung eingebundenen Schläuchen 5, 9, 28 wird/werden der/die angebundene(n) Zieltank(s) 7 und 11 in festgelegten Reihenfolge befüllt. Dabei sind die Absperrventile 22 an den Schlauchverbindungsstellen 4, 10 offen. Zunächst wird Wasser aus der Leitung und den Schläuchen mittels Würze aus einem Sudhaus auf Gully 23 verdrängt. Dabei sind die Absperrventile 30a, b an den Tankkoppelstellen geöffnet und die Tankventile 31a, b geschlossen. Das Absperrventil auf Gully 23 ist geöffnet, und dasjenige zur Absperrung der Leitung 24 ist geschlossen. Nach Ablauf der Soll-Ausschubmenge bis zum jeweiligen Tank 7 (Rezeptwert plus Volumen in Schläuchen 5, 9, 28, s. o.), gemessen am IDM der Quellanlage (als beispielsweise des Sudhauses) wird das jeweilige Tankventil 31a geöffnet und das Absperrventil 30a an der Schlauchverbindungsstelle des Tanks geschlossen.

Von der Quellanlage (beispielsweise dem Sudhaus) wird am Ende des Befüllvorgangs das Produkt (die Würze) mittels Wasser zum jeweiligen Zieltank 7 hin verdrängt. Dazu wird wiederum eine Soll-Ausschubmenge errechnet, nach deren Erreichen das Absperrventil 30a an der Schlauchverbindungsstelle des Tanks geöffnet und das Tankventil 31 a geschlossen wird. Die Leitung 1a und die Schläuche 5, 9, 28 werden für eine bestimmte Zeit mittels Wasser von der Quellanlage aus gespült und danach wird der Programmschritt beendet bzw. springt in einen Warteschritt. Bevor mit dem nächsten Ausschubvorgang dieselbe Schrittfolge zur nächsten Befüllung des entsprechend der Vorauswahl nächsten Tanks 11 startet, ist die ordnungsgemäße Anbindung und Ventilstellung für das Befüllen dieses Tanks gegebenenfalls vom Bediener zu quittieren.

Als nächstes kann das Programm der Hefeernte ausgeführt werden. Über die Hefeernteleitung 2a und die in dieser Leitung angebundenen Schläuche wird mittels einer Hefeerntepumpe von dem/den eingebundenen Quelltank(s) in den Hefekeller geerntet. Dabei sind die Absperrventile an den Schlauchverbindungsstellen offen. Zunächst wird Wasser aus der Leitung und den Schläuchen mittels Hefe vom ersten Quelltank, dessen Tankventil geöffnet ist, auf den Gully im Hefekeller verdrängt. Dabei sind die Absperrventile an den Tankkoppelstellen geöffnet und alle anderen Tankventile geschlossen. Nach Ablauf der Soll-Ausschubmenge vom jeweiligen Quelltank zum Hefekeller, gemessen am IDM der Hefeernteleitung, wird im Hefekeller auf Tank umgeschaltet. Nach Unterschreiten des Trübungssollwerts wird das Wasserventil der Hefeernteleitung geöffnet und das Quelltankventil geschlossen und damit die Hefe mittels Wasser zum Hefekeller hin verdrängt, bis die Soll-Ausschubmenge erreicht ist. Die Leitung und die Schläuche werden für eine bestimmte Zeit mittels Wasser von der Schlaucherbierentleerleitung aus gespült. Danach schließt das Wasserventil und das Programm wird beendet bzw. springt in einen Warteschritt. Bevor dieselbe Schrittfolge zur Hefeernte aus dem entsprechend der Vorauswahl nächsten Tank startet, ist die ordnungsgemäße Anbindung und Ventilstellung für das Ernten der Hefe aus diesem Tank gegebenenfalls vom Bediener zu quittieren.

Als nächstes kann das Programm des Schlauchens ausgeführt werden. Über die Schlaucherbierentleer- und Befüllleitung sowie die in diese Leitungen eingebundenen Schläuchen wird/werden mittels einer Schlaucherbierpumpe der/die eingebundene(n) Quell- in den/die eingebundene(n) Zieltank(s) in der festgelegten Reihenfolge geschlaucht. Dabei sind die Absperrventile an den Schlauchverbindungsstellen offen. Zunächst wird Wasser aus Leitung und Schläuchen mittels Schlaucherbier vom ersten Quelltank, dessen Tankventil geöffnet ist, auf den Gully der Schlaucherbierbefüllleitung verdrängt. Dabei sind die Absperrventile an den Tankkoppelstellen geöffnet, und alle anderen Tankventile sind geschlossen. Das Absperrventil auf Gully ist geöffnet und dasjenige zur Absperrung der Leitung geschlossen.

Nach Ablauf der Soll-Ausschubmenge vom jeweiligen Quell- bis zum jeweiligen Zieltank, gemessen am IDM der Schlaucherbierentleerleitung, wird das jeweilige Zieltankventil geöffnet und das Absperrventil an der Schlauchverbindungsstelle des Tanks geschlossen. Wird während des Schlauchens der Quelltank leer, wird entsprechend der Vorauswahl auf den nächsten Quelltank umgeschaltet, nachdem gegebenenfalls der Bediener die ordnungsgemäße Anbindung und Ventilstellung für das Schlauchen aus diesem Tank quittiert hat. Wird während des Schlauchens der Zieltank voll, wird entsprechend der Vorauswahl auf den nächsten Zieltank umgeschaltet, nachdem gegebenenfalls der Bediener die ordnungsgemäße Anbindung und Ventilstellung für das Schlauchen in diesen Tank quittiert hat. Bei Leermeldung des entsprechend der Vorauswahl letzten Quelltanks wird das Wasserventil der Schlaucherbierentleerleitung geöffnet und das Quelltankventil geschlossen und damit das Schlaucherbier mittels Wasser zum Zieltank hin verdrängt. Nach Erreichen der Soll-Ausschubmenge wird das Absperrventil an der Schlauchverbindungsstelle des Zieltanks geöffnet und das Tankventil geschlossen. Die Leitung und die Schläuche werden für eine vorbestimmte Zeit mittels Wasser von der Schlaucherbierentleerleitung aus gespült. Danach schließ das Wasserventil, und es wird das Programm beendet.

Nachfolgend kann das Programm des Entleerens ausgeführt werden. Beispielsweise kann Unfiltrat aus einem Tank in eine Filtervorrichtung gefördert werden. Über die Entleerleitung 2b sowie die in der Leitung eingebundenen Schläuche 14, 18, 32 wird/werden mittels einer Bierpumpe Produkt (Unfiltrat) von dem/den eingebundenen Quelltank(s) 16, 20 zur Filtervorrichtung gefördert. Dabei sind die Absperrventile 34 an den Schlauchverbindungsstellen 13, 19 offen. Zunächst wird Wasser aus Leitung 2b und Schläuchen 18, 32 mittels Produkt (Unfiltrat) vom ersten Quelltank 16, dessen Tankventil 35a geöffnet ist, auf den Gully der Zielanlage (beispielsweise dem Filterkeller) verdrängt. Dabei ist das Absperrventil 36b an der Tankkoppelstelle 21 geöffnet und das Absperrventil 36a an der Tankkoppelstelle 15 geschlossen, und es sind alle anderen Tankventile 35b geschlossen. Nach Ablauf der Soll-Ausschubmenge vom jeweiligen Quelltank 16 zum Filterkeller, gemessen am IDM der Entleerleitung 2b, wird in der Zielanlage auf Produkteinlauf umgeschaltet.

Wird während der Entleerung der Quelltank 16 leer, wird entsprechend der Vorauswahl auf den nächsten Quelltank 20 umgeschaltet, nachdem gegebenenfalls der Bediener die ordnungsgemäße Anbindung und Ventilstellung für das Entleeren dieses Tanks quittiert hat. Bei Leermeldung des entsprechend der Vorauswahl letzten Quelltanks 20 wird das Wasserventil 25 der Entleerleitung 2b geöffnet und das Quelltankventil 35b geschlossen und damit das Produkt mittels Wasser zur Zielanlage hin verdrängt, bis die Soll-Ausschubmenge erreicht ist. Danach schließt das Wasserventil 25 und das Programm wird beendet.

Als nächstes Programm kann ein Spülen der Leitung einschließlich der Schläuche mit Heißwasser bzw. einem Desinfektionsmittel von einer CIP-Anlage erfolgen. Eine Befüll- und/oder Entleerleitung sowie die in diese Leitung(en) eingebundenen Schläuche wird/werden evtl. unter Einbindung von Leitungen von Quellanlagen bzw. zu Zielanlagen hin über die CIP-Anlage mittels Heißwasser bzw. Desinfektionsmittel steril gefahren. Dabei sind die Absperrventile an den Schlauchverbindungsstellen offen. In den Befüllleitungen ist das Absperrventil auf Gully geschlossen (und wird gegebenenfalls getaktet) und dasjenige zur Absperrung der Leitung geöffnet. Die Ventile zur Absperrung des CIP-Vorlaufs an den Entleerleitungen sind geöffnet, die zugehörigen Absperrventile zur Leckageabführung sind geschlossen und werden gegebenenfalls getaktet. Die Sitzanlüftungen (bei Verwendung von Doppelsitzventilen) an denjenigen Tankventilen, die mittels Schläuchen im Kreislauf angebunden sind, werden in den jeweiligen Medienschritten angelüftet.

Nachfolgend kann ein CIP-Vorgang für die Leitung und Schläuche ausgeführt werden. Eine Befüll 1a- und/oder Entleerleitung 2b sowie die in diese Leitung(en) eingebundenen Schläuche 5, 9, 28 / 14, 18, 31 wird/werden evtl. unter Einbindung von Leitungen von Quellanlagen bzw. zu Zielanlagen hin über die CIP-Anlage mittels Lauge, Säure, Wasser und gegebenenfalls Heißwasser und/oder Desinfektionsmittel gereinigt. Dabei sind die Absperrventile 22/34 an den Schlauchverbindungsstellen 4, 10 / 13, 19 offen. In der Befüllleitung 1a ist das Absperrventil auf Gully 23 geschlossen (und wird gegebenenfalls getaktet) und dasjenige zur Absperrung der Leitung 24 geöffnet. Die Ventile zur Absperrung des CIP-Vorlaufs an den Entleerleitungen 37 sind geöffnet, die zugehörigen Absperrventile zur Leckageabführung 38 sind geschlossen und werden gegebenenfalls getaktet. Die Sitzanlüftungen an denjenigen Tankventilen 31/35 (bei Ausbildung als Doppelsitzventile), die mittels Schläuchen 5, 9, 28 / 14, 18, 32 im Kreislauf eingebunden sind, werden in den jeweiligen Medienschritten getaktet.

Nachfolgend kann das Programm eines Tank-CIP ausgeführt werden. Ein oder mehrere Tanks werden mit Hilfe der CIP-Rücklauf-Leitung mit einer Pumpe und der darin eingebundenen Schläuche von der CIP-Anlage aus gereinigt. Dabei sind die Absperrventile an den Schlauchverbindungsstellen offen. Es können mehrere Tanks hintereinander gereinigt werden, wenn sichergestellt ist, dass während der Reinigung des einen Tanks der/die Steigleitung(en) des/der übrigen Tank(s) nicht oder leckagesicher an den CIP-Vorlauf angebunden sind. Bevor die Reinigung eine bestimmten Tanks automatisch starten kann, ist die ordnungsgemäße Anbindung und Ventilstellung für die Reinigung dieses Tanks gegebenenfalls vom Bediener zu quittieren.

## Patentansprüche

1. Tankanbindungssystem mit
mehreren Tanks (T);
wobei jeder der mehreren Tanks (T) einen Tanklauslauf (0) aufweist, mit dem über ein erstes Ventil (31a, 31b, 35a, 35b) ein Leitungsstück (L) verbunden ist, das an einem ersten Ende eine erste Schlauchverbindungsstelle (6, 12, 17, 42) und an einem zweiten Ende eine zweite Schlauchverbindungsstelle (8, 15, 21, 40) aufweist; und
mehreren Leitungen (1a, 1b, 2a, 2b, 2c, 3), die jeweils zwei weitere Schlauchverbindungsstellen (4, 10, 13, 19) aufweisen, die durch ein zweites Ventil voneinander abgesperrt werden können oder durch eine Leitungsunterbrechung voneinander getrennt sind.

2. Tankanbindungssystem gemäß Anspruch 1, in dem das erste Ventil (31a, 31b, 35a, 35b) ein automatisches leckagesicheres Ventil ist.

3. Tankanbindungssystem gemäß Anspruch 1 oder 2, in dem die zweite Schlauchverbindungsstelle (8, 15, 21, 40) des Leitungsstücks (L) mit einem automatischen Absperrventil (30a) ausgestattet ist.

4. Tankanbindungssystem gemäß einem der vorhergehenden Ansprüche, in dem die mehreren Leitungen (1a, 1b, 2a, 2b, 2c) zumindest eine Befüllleitung (1a, 1b) zum Befüllen von zumindest einem der mehreren Tanks (T) und zumindest eine Entleerleitung (2a, 2b, 2c) zum Entleeren von zumindest einem der mehreren Tanks (T) umfassen.

5. Tankanbindungssystem gemäß Anspruch 4, in dem jede Befüllleitung (1a, 1b) eine stromaufwärtige (4) und eine stromabwärtige (10) Schlauchverbindungsstelle als die zwei weiteren Schlauchverbindungsstellen (4, 10) aufweist und stromabwärts von der stromabwärtigen Schlauchverbindungsstelle (10) eine Kombination eines Entwässerungsventils (23) und eines Blockventils (24) umfasst.

6. Tankanbindungssystem gemäß Anspruch 4 oder 5, in dem jede Entleerleitung (2a, 2b, 2c, 3) eine stromaufwärtige (13) und eine stromabwärtige (19) Schlauchverbindungsstelle als die zwei weiteren Schlauchverbindungsstellen (13, 19) aufweist und stromaufwärts von der stromaufwärtigen Schlauchverbindungsstelle (13) über ein, insbesondere automatisches und leakagesicheres, drittes Ventil (25) mit einer Wasserleitung verbunden ist.

7. Tankanbindungssystem gemäß Anspruch 6, in dem jede Entleerleitung (2a, 2b, 2c, 3) stromaufwärts von der stromaufwärtigen Schlauchverbindungsstelle (13) über das dritte Ventil (25) mit einer Cleaning-in-Place-Einrichtung (37, 38) verbunden ist.

8. Tankanbindungssystem gemäß einem der vorhergehenden Ansprüche, in dem über mehrere erste Schläuchen (5, 9, 28) eine erste Gruppe (7, 11) von den mehreren Tanks (T) mit einer Befüllleitung (1a) und/oder über mehrere zweite Schläuchen (14, 18, 32) eine zweite Gruppe (16, 20) von den mehreren Tanks (T) mit einer Entleerleitung (2b) angebunden ist.

9. Tankanbindungssystem gemäß einem der vorhergehenden Ansprüche für eine Brauerei, in dem die Tanks (T) Lagertanks und Gärtanks umfassen.

10. Verfahren zum Befüllen und/oder Entleeren von Tanks (T), die jeweils einen Tankauslauf (0) aufweisen, der über ein erstes Ventil (31a, 31b, 35a, 35b) mit einem Leitungsstück (L) zwischen zwei Schlauchverbindungsstellen (6, 8, 12, 40, 42, 21, 17, 15) desselben verbunden ist, mit den Schritten:
a) Anbinden einer Gruppe von Zieltanks (7, 11) der Tanks (T) an zumindest eine Befüllleitung (1a), die zwei Befüllleitungs-Schlauchverbindungsstellen (4, 10) aufweist, die durch ein zweites Ventil voneinander abgesperrt werden können oder durch eine Leitungsunterbrechung voneinander getrennt sind, mithilfe einer ersten Mehrzahl an Schläuchen (5, 9, 28),
wobei das Anbinden das Verbinden von einer der zwei Schlauchverbindungsstellen (6, 8, 12, 40) mit einer der zwei Befülllleitungs-Schlauchverbindungsstellen (4, 10) durch Schläuche der ersten Mehrzahl an Schläuchen (5, 9, 28) umfasst;
und/oder b) Anbinden einer Gruppe von Quelltanks (16, 20) der Tanks (T) an zumindest eine Entleerleitung (2b), die zwei Entleerleitungs-Schlauchverbindungsstellen (13, 19) aufweist, die durch ein zweites Ventil voneinander abgesperrt werden können oder durch eine Leitungsunterbrechung voneinander getrennt sind, mithilfe einer zweiten Mehrzahl an Schläuchen (14, 18, 32);
wobei das Anbinden das Verbinden von einer der zwei Schlauchverbindungsstellen (42, 21, 17, 15) mit einer der zwei Entleerleitungs-Schlauchverbindungsstellen (4, 10) durch Schläuche der zweiten Mehrzahl an Schläuchen (14, 18, 32) umfasst;
und nach dem Beenden der Anbindung der Gruppe von Zieltanks (7, 11) und/oder der Gruppe von Quelltanks (16, 20):
c) Befüllen der Gruppe von Zieltanks (7, 11) mit einem Produkt und/oder Leeren der Gruppe von Quelltanks (16, 20), ohne Lösen einer Schlauchverbindung.

11. Verfahren gemäß Anspruch 10, wobei das Anbinden der Zieltanks (7, 11) das Verbinden der Zieltanks (7, 11) miteinander durch Schläuche aus der ersten Mehrzahl an Schläuchen (5, 9, 28) miteinander und/oder das Anbinden der Quelltanks (16, 20) das Verbinden der Quelltanks (16, 20) miteinander durch Schläuche aus der zweiten Mehrzahl an Schläuchen (14,18, 32) umfasst.

12. Verfahren gemäß Anspruch 10 oder 11, in dem ein Produkt von einem Quelltank (16, 20) in einen Zieltank (7, 11) transferiert wird.

13. Verfahren gemäß Anspruch 10, 11 oder 12, weiterhin nach dem Beenden der Anbindung der Gruppe von Zieltanks (7, 11) und/oder der Gruppe von Quelltanks (16, 20) und vordem Füllen und Leeren umfassend:
Spülen mit Wasser, insbesondere entgastem Wasser, der zumindest einen Befüllleitung (1a) und/oder der zumindest einen Entleerleitung (2b) und/oder von Schläuchen der ersten Mehrzahl an Schläuchen (5, 9, 28) und/oder der zweiten Mehrzahl an Schläuchen (14,18, 32), ohne Lösen einer Schlauchverbindung.

14. Verfahren gemäß Anspruch 13, weiterhin mit Ausschieben des Wassers aus der zumindest einen Befüllleitung (1a) und/oder der zumindest einen Entleerleitung (2b) und/oder von Schläuchen der ersten Mehrzahl an Schläuchen (5, 9, 28) und/oder der zweiten Mehrzahl an Schläuchen (14,18, 32) nach Beenden des Spülens, ohne Lösen einer Schlauchverbindung.

15. Verfahren gemäß einem der Ansprüche 10 bis 14, weiterhin mit Reinigen der zumindest einen Befüllleitung (1a) und/oder der zumindest einen Entleerleitung (2b) und/oder von Schläuchen der ersten Mehrzahl an Schläuchen (5, 9, 28) und/oder der zweiten Mehrzahl an Schläuchen (14,18, 32) nach Beenden des Befüllens und/oder Entleerens mithilfe einer angebundenen Cleaning-In-Place-Einrichtung, ohne Lösen einer Schlauchverbindung.

16. Verfahren gemäß einem der Ansprüche 10 bis 15, weiterhin mit Reinigen eines oder nacheinander mehrerer der Tanks (T) nach Beenden des Befüllens und/oder Entleerens mithilfe einer angebundenen Cleaning-In-Place-Einrichtung, ohne Lösen einer Schlauchverbindung.

## Claims

1. Tank connection system with
several tanks (T);
whereby each one of the plurality of tanks (T) has a tank outlet (0) to which a duct element (L), which has a first hose junction (6, 12, 17, 42) on a first end and a second hose junction (8, 15, 21, 40) on a second end, is connected via a first valve (31a, 31b, 35a, 35b); and
several pipes (1a, 1b, 2a, 2b, 2c, 3) that respectively have two further hose junctions (4, 10, 13, 19) that can be shut off from each other by means of a second valve or that are disconnected from each other through a line break.

2. Tank connection system according to claim 1 in which the first valve (31a, 31b, 35a, 35b) is an automated leakage-proof valve.

3. Tank connection system according to claim 1 or 2 in which the second hose junction (8, 15, 21, 40) of the duct element (L) is equipped with an automated shut-off valve (30a).

4. Tank connection system according to one of the preceding claims in which the plurality of pipes (1a, 1b, 2a, 2b, 2c) comprise at least one filling pipe (1a, 1b) to fill at least one of the plurality of tanks (T) and at least one emptying pipe (2a, 2b, 2c) to empty at least one of the plurality of tanks (T).

5. Tank connection system according to claim 4 in which each filling pipe (1a, 1b) has an upstream (4) and a downstream (10) hose junction as the two further hose junctions (4, 10) and comprises a combination of a drain valve (23) and a block valve (24) downstream of the downstream hose junction (10).

6. Tank connection system according to claim 4 or 5 in which each emptying pipe (2a, 2b, 2c, 3) has an upstream (13) and a downstream (19) hose junction as the two further hose junctions (13, 19) and is connected to a water pipe upstream of the upstream hose junction (13) by means of a particularly automated and leakage-proof third valve (25).

7. Tank connection system according to claim 6 in which each emptying pipe (2a, 2b, 2c, 3) is connected to a cleaning-in-place system (37, 38) upstream of the upstream hose junction (13) by means of the third valve (25).

8. Tank connection system according to one of the preceding claims in which a first group (7, 11) of the plurality of tanks (T) is connected by means of a plurality of first hoses (5, 9, 28) with a filling pipe (1a) and/or in which a second group (16, 20) of the plurality of tanks (T) is connected by means of a plurality of second hoses (14, 18, 32) with an emptying pipe (2b).

9. Tank connection system according to one of the preceding claims for a brewery in which the tanks (T) comprise storage tanks and fermentation tanks.

10. Process for filling and/or emptying of tanks (T) that have respectively one tank outlet (0), which is connected to a duct element (L) between two hose junctions (6, 8, 12, 40, 42, 21, 17, 15) of said duct element by means of a first valve (31a, 31b, 35a, 35b), with the steps:
a) connecting a group of target tanks (7, 11) of the tanks (T) to at least one filling pipe (1a) that has two filling pipe hose junctions (4, 10), which can be shut off from each other by means of a second valve or that are disconnected from each other by means of a line break, by means of a first plurality of hoses (5, 9, 28),
whereby the connecting comprises the linkage of one of the two hose junctions (6, 8, 12, 40) to one of the two filling pipe hose junctions (4, 10) by means of hoses of the first plurality of hoses (5, 9, 28);
and/or b) connecting a group of source tanks (16, 20) of the tanks (T) to at least one emptying pipe (2b) that has two emptying pipe hose junctions (13, 19), which can be shut off from each other by means of a second valve or that are disconnected from each other through a line break, by means of a second plurality of hoses (14, 18, 32);
whereby the connecting comprises the linkage of one of the two hose junctions (42, 21, 17, 15) to one of the two emptying pipe hose junctions (4, 10) by means of hoses of the second plurality of hoses (15, 18, 32);
and after finishing the connecting of the group of target tanks (7, 11) and/or of the group of source tanks (16, 20):
c) filling of the group of target tanks (7, 11) with a product and/or emptying of the group of source tanks (16, 20) without disconnecting a hose connection.

11. Process according to claim 10, whereby the connection of the target tanks (7, 11) comprises the interconnection of the target tanks (7, 11) by means of hoses from the first plurality of hoses (5, 9, 28) and/or the connection of the source tanks (16, 20) comprises the interconnection of the source tanks (16, 20) by means of hoses from the second plurality of hoses (14,18, 32).

12. Process according to claim 10 or 11 in which a product is transferred from a source tank (16, 20) into a target tank (7, 11).

13. Process according to claim 10, 11 or 12, further comprising, after finishing the connection of the group of target tanks (7, 11) and/or the group of source tanks (16, 20) and prior to filling and emptying:
rinsing with water, particularly de-gassed water, of the at least one filling pipe (1a) and/or the at least one emptying pipe (2b) and/or of hoses of the first plurality of hoses (5, 9, 28) and/or the second plurality of hoses (14, 18, 32) without disconnecting the hose connection.

14. Process according to claim 13, further with discharging the water of the at least one filling pipe (1a) and/or the at least one emptying pipe (2b) and/or of hoses of the first plurality of hoses (5, 9, 28) and/or the second plurality of hoses (14, 18, 32) after finishing the rinsing process, without disconnecting any hose connection.

15. Process according to one of the claims 10 to 14, further with cleaning of the at least one filling pipe (1a) and/or of the at least one emptying pipe (2b) and/or of hoses of the first plurality of hoses (5, 9, 28) and/or the second plurality of hoses (14, 18, 32) after finishing the filling and/or the emptying process by means of a connected cleaning-in-place system, without disconnecting any hose connection.

16. Process according to one of the claims 10 to 15, further with cleaning of one or successively multiple ones of the tank(s) (T) after finishing the filling and/or emptying process by means of a connected cleaning-in-place system, without disconnecting any hose connection.

## Revendications

1. Système de raccordement de cuves comprenant
plusieurs cuves (T) ;
chacune des multiples cuves (T) présentant une sortie de cuve (0) à laquelle est relié, par le biais d'une première vanne (31a, 31b, 35a, 35b), un morceau de conduite (L) qui présente un premier point de liaison de tuyau (6, 12, 17, 42) à une première extrémité et un second point de liaison de tuyau (8, 15, 21, 40) à une seconde extrémité ; et
plusieurs conduites (1a, 1b, 2a, 2b, 2c, 3) qui présentent respectivement deux points de liaison de tuyau supplémentaires (4, 10, 13, 19) qui peuvent être isolés l'un par rapport à l'autre par une deuxième vanne ou sont séparés l'un de l'autre par une interruption de conduite.

2. Système de raccordement de cuves selon la revendication 1, dans lequel la première vanne (31a, 31b, 35a, 35b) est une vanne anti-fuite automatique.

3. Système de raccordement de cuves selon la revendication 1 ou 2, dans lequel le second point de liaison de tuyau (8, 15, 21, 40) du morceau de conduite (L) est équipé d'une vanne d'arrêt automatique (30a).

4. Système de raccordement de cuves selon l'une des revendications précédentes, dans lequel les multiples conduites (1a, 1b, 2a, 2b, 2c) comprennent au moins une conduite de remplissage (1a, 1b) pour le remplissage d'au moins une des multiples cuves (T) et au moins une conduite de vidange (2a, 2b, 2c) pour la vidange d'au moins une des multiples cuves (T).

5. Système de raccordement de cuves selon la revendication 4, dans lequel chaque conduite de remplissage (1a, 1b) présente un point de liaison de tuyau d'amont (4) et un point de liaison de tuyau d'aval (10) qui constituent les deux points de liaison de tuyau supplémentaires (4, 10) et comprend, en aval du point de liaison de tuyau d'aval (10), une combinaison d'un robinet de purge (23) et d'une vanne de blocage (24).

6. Système de raccordement de cuves selon la revendication 4 ou 5, dans lequel chaque conduite de vidange (2a, 2b, 2c, 3) présente un point de liaison de tuyau d'amont (13) et un point de liaison de tuyau d'aval (19) qui constituent les deux points de liaison de tuyau supplémentaires (13, 19) et est reliée, en amont du point de liaison de tuyau d'amont (13), à une conduite d'eau par le biais d'une troisième vanne (25), notamment automatique et anti-fuite.

7. Système de raccordement de cuves selon la revendication 6, dans lequel chaque conduite de vidange (2a, 2b, 2c, 3) est reliée, en amont du point de liaison de tuyau d'amont (13), à un dispositif de nettoyage sur place (37, 38) par le biais de la troisième vanne (25).

8. Système de raccordement de cuves selon l'une des revendications précédentes, dans lequel un premier groupe (7, 11) des multiples cuves (T) est raccordé à une conduite de remplissage (1a) par l'intermédiaire de plusieurs premiers tuyaux (5, 9, 28) et/ou un deuxième groupe (16, 20) des multiples cuves (T) est raccordé à une conduite de vidange (2b) par l'intermédiaire de plusieurs seconds tuyaux (14, 18, 32).

9. Système de raccordement de cuves selon l'une des revendications précédentes pour une brasserie, dans lequel les cuves (T) comprennent des cuves de stockage et des cuves de fermentation.

10. Procédé de remplissage et/ou de vidange de cuves (T) qui présentent chacune une sortie de cuve (0) qui est reliée, par le biais d'une première vanne (31a, 31b, 35a, 35b), à un morceau de conduite (L) entre deux points de liaison de tuyau (6, 8, 12, 40, 42, 21, 17, 15) dont ce dernier est pourvu, comprenant les étapes de :
a) raccordement d'un groupe de cuves cibles (7, 11) des cuves (T) à au moins une conduite de remplissage (1a) qui présente deux points de liaison de tuyau de conduite de remplissage (4, 10) qui peuvent être isolés l'un par rapport à l'autre par une deuxième vanne ou qui sont séparés l'un de l'autre par une interruption de conduite, à l'aide d'une première pluralité de tuyaux (5, 9, 28),
le raccordement comprenant la liaison de l'un des deux points de liaison de tuyau (6, 8, 12, 40) avec un des deux points de liaison de tuyau de conduite de remplissage (4, 10) grâce à des tuyaux de la première pluralité de tuyaux (5, 9, 28) ;
et/ou
b) raccordement d'un groupe de cuves sources (16, 20) des cuves (T) à au moins une conduite de vidange (2b) qui présente deux points de liaison de tuyau de conduite de vidange (13, 19) qui peuvent être isolés l'un par rapport à l'autre par une deuxième vanne ou qui sont séparés l'un de l'autre par une interruption de conduite, à l'aide d'une seconde pluralité de tuyaux (14, 18, 32) ;
le raccordement comprenant la liaison de l'un des deux points de liaison de tuyau (42, 21, 17, 15) avec un des deux points de liaison de tuyau de conduite de vidange (13, 19) grâce à des tuyaux de la seconde pluralité de tuyaux (14, 18, 32) ;
et, une fois terminé le raccordement du groupe de cuves cibles (7, 11) et/ou du groupe de cuves sources (16, 20) :
c) remplissage du groupe de cuves cibles (7, 11) avec un produit et/ou vidange du groupe de cuves sources (16, 20), sans séparation d'une liaison de tuyau.

11. Procédé selon la revendication 10, dans lequel le raccordement des cuves cibles (7, 11) comprend la liaison des cuves cibles (7, 11) les unes aux autres grâce à des tuyaux de la première pluralité de tuyaux (5, 9, 28) et/ou le raccordement des cuves sources (16, 20) comprend la liaison des cuves sources (16, 20) les unes aux autres grâce à des tuyaux de la seconde pluralité de tuyaux (14, 18, 32).

12. Procédé selon la revendication 10 ou 11, dans lequel un produit est transféré d'une cuve source (16, 20) dans une cuve cible (7, 11).

13. Procédé selon la revendication 10, 11 ou 12, comprenant en outre, une fois terminé le raccordement du groupe de cuves cible (7, 11) et/ou du groupe de cuves sources (16, 20), et avant le remplissage et la vidange :
un rinçage à l'eau, notamment à l'eau dégazée, de l'au moins une conduite de remplissage (1a) et/ou de l'au moins une conduite de vidange (2b) et/ou de tuyaux de la première pluralité de tuyaux (5, 9, 28) et/ou de la seconde pluralité de tuyaux (14, 18, 32), sans séparation d'une liaison de tuyau.

14. Procédé selon la revendication 13, comprenant en outre un refoulement de l'eau hors de l'au moins une conduite de remplissage (1a) et/ou de l'au moins une conduite de vidange (2b) et/ou de tuyaux de la première pluralité de tuyaux (5, 9, 28) et/ou de la seconde pluralité de tuyaux (14, 18, 30) à la fin du rinçage, sans séparation d'une liaison de tuyau.

15. Procédé selon l'une des revendications 10 à 14, comprenant en outre un nettoyage de l'au moins une conduite de remplissage (1a) et/ou de l'au moins une conduite de vidange (2b) et/ou de tuyaux de la première pluralité de tuyaux (5, 9, 28) et/ou de la seconde pluralité de tuyaux (14, 18, 32), une fois terminé(e) le remplissage et/ou la vidange, à l'aide d'un dispositif de nettoyage sur place raccordé, sans séparation d'une liaison de tuyau.

16. Procédé selon l'une des revendications 10 à 15, comprenant en outre un nettoyage d'une cuve ou de plusieurs cuves (T) les unes après les autres, une fois terminé(e) le remplissage et/ou la vidange, à l'aide d'un dispositif de nettoyage sur place raccordé, sans séparation d'une liaison de tuyau.
